# EUROPÄISCHE PATENTANMELDUNG

(11) **EP 0 779 466 A1**
(43) Veröffentlichungstag der Anmeldung: **18.06.1997**
(21) Anmeldenummer: 96810185.7
(22) Anmeldetag: 22.03.1996
(51) Int. Cl.: F16L 59/02

(54) **Dämmkörper**

(30) Priorität: 14.12.1995 CH 3538/95
(71) Anmelder: SAGER AG, 5724 Dürrenäsch (CH)
(72) Erfinder: Sager, Herbert, CH-5724 Dürrenäsch (CH); Hasler, Jürg, CH-5610 Wohlen (CH)
(74) Vertreter: Rottmann, Maximilian R.

(57) **Zusammenfassung**

Der flache Dämmkörper besitzt an seiner zur Anlage an eine Wandung eines abzudämmenden Objekts bestimmten Seite einen Selbstklebebelag. Dieser ermöglicht es in einfacher Weise, den Dämmkörper in einem Arbeitsgang an eine Wandung anzulegen und zugleich daran zu befestigen, wobei auf zusätzliche Halterungen verzichtet werden kann. Dadurch wird das Verlegen des Dämmkörpers erleichtert, indem die Montage desselben im Einmannbetrieb erfolgen kann.

Um eine haltbare Verbindung des Selbstklebebelages (2) mit der aus Faserstoffen gebildeten Grundschicht (1) zu erzielen, ist zwischen dem Selbstklebebelag (2) und der Grundschicht (1) eine aus Faserstoffen gebildete Zwischenschicht (3) vorgesehen, deren Faserdichte grösser ist als diejenige der Grundschicht (1).

## Beschreibung

Die Erfindung betrifft einen flachen Dämmkörper zur Wärme- und/oder Schalldämmung, für die Verlegung an vornehmlich glatten Wandungen, wobei die zur Anlage an eine Wandung bestimmte Seite des Dämmkörpers mit einem Selbstklebebelag versehen ist.

Dämmkörper ohne Selbstklebebelag sind in zahlreichen Ausführungen und Anwendungsformen bekannt, z.B. in Form von steifen Platten oder flexiblen Matten, wie Rollfilzen, Lamellenmatten und dgl., mit einer aus Faserstoffen gebildeten Grundschicht. Das Verlegen solcher Dämmkörper ist mitunter mit einigem Aufwand verbunden, indem z.B. für das Anlegen eines grossflächigen Dämmkörpers an eine Wandung und für dessen Befestigung an der Wandung in der Regel mehr als eine Arbeitskraft benötigt wird. Ein in dieser Beziehung besonderer Anwendungsfall ist das Abdämmen von Leitungsrohren (innen oder aussen), z.B. von Lüftungskanälen, wobei die Kanäle aussen mit Dämmstoffbahnen umwickelt und die Wickel mit Bandagen zusammengehalten werden. Für die Herstellung einer solchen Abdämmung sind normalerweise mindestens zwei Arbeitskräfte erforderlich, wovon die eine den Wickel in der Anlegeposition hält und die andere die Bandage anbringt. Ähnlich verhält es sich beim Belegen der Innenseite solcher Lüftungskanäle mit Dämmstoffbahnen oder beim Anbringen von Dämmplatten an einer Decke.

Durch den Selbstklebebelag wird die Verlegung des Dämmkörpers derart vereinfacht, dass die Montage desselben im Einmannbetrieb erfolgen kann. Dieser als Montagehilfe und zugleich der endgültigen Befestigung des Dämmkörpers dienende Selbstklebebelag ermöglicht es in einfacher Weise, den Dämmkörper in einem Arbeitsgang an eine Wandung anzulegen und zugleich daran zu befestigen.

Das Anbringen eines solchen Selbstklebebelags auf eine der glatten Oberflächen einer praktisch steifen Dämmstoffplatte, z.B. mit einer aus Schaumstoff gebildeten Grundplatte, bietet in der Regel keine besonderen Schwierigkeiten, indem ein doppelseitiger Selbstklebebelag unmittelbar auf der Montageseite der Grundplatte angebracht werden kann. Eine solche Ausführung ist beispielsweise aus der GB-A-2 011 837 bekannt.

Anders verhält es sich hingegen bei Dämmkörpern mit einer aus Faserstoffen gebildeten Grundschicht. Solche Dämmkörper eignen sich nicht ohne weiteres für die unmittelbare Beschichtung mit einem doppelseitigen Selbstklebebelag herkömmlicher Ausführung, da sich für die Verbindung zwischen der relativ lockeren Fasergrundschicht und der ziemlich glatten Klebeschicht zu wenig Kontaktstellen pro Flächeneinheit ergeben würden. Eine solche Verbindung wäre daher zu schwach und würde sich bereits bei geringster Belastung, z.B. beim Verbiegen einer auf diese Weise beschichteten Dämmstoffmatte oder -platte, wieder lösen.

Um eine haltbare Verbindung eines doppelseitigen Selbstklebebelages mit einer aus Faserstoffen gebildeten Grundschicht zu erzielen, wird deshalb ein Dämmkörper vorgeschlagen, bei dem erfindungsgemäss zwischen dem Selbstklebebelag und der Grundschicht wenigstens eine aus Faserstoffen gebildete Zwischenschicht vorgesehen ist, deren Faserdichte grösser ist als diejenige der Grundschicht. Dadurch ergibt sich eine höhere Anzahl Kontaktstellen pro Flächeneinheit an der Verbindungsfläche zum Selbstklebebelag und daher eine verbesserte Haftfestigkeit des letzteren. Zur Erzielung innigerer Schichtverbindungen kann es unter Umständen zweckmässig sein, mehrere Zwischenschichten vorzusehen, wobei in diesem Fall die Zwischenschichten vorzugsweise eine von der Grundschicht zum Selbstklebebelag hin zunehmende Faserdichte aufweisen.

Die erfindungsgemässe Lösung ermöglicht es, auch einen flexiblen Dämmkörper in einfacher Weise so zu verlegen, dass er die Anlegeposition und seine endgültige Form beibehält. Ausserdem lässt sich auf diese Weise eine dauerhafte, auch unter Dauerbelastung haltbare Verbindung des Dämmkörpers mit dem Untergrund herstellen, so dass in den meisten Anwendungsfällen auf zusätzliche Mittel, z.B. flächendeckende Bandagen bei der Ummantelung von Lüftungskanälen oder Stützhalterungen bei Innenisolationen derselben, welche bei Verwendung herkömmlicher Dämmkörper eine solche Verbindung gewährleisten sollen, verzichtet werden kann. Auch in diesem Fall ist für die Montage von Dämmkörpern dieser Art normalerweise eine einzige Arbeitskraft ausreichend.

Unter Umständen genügt es, wenn der Selbstklebebelag nicht flächendeckend auf der Montageseite des Dämmkörpers, sondern nur auf einem Teil der Oberfläche desselben aufgebracht ist.

Für den Selbstklebebelag eignen sich solche ohne oder mit Trägerschichten aus Textil- oder Papierbahnen und den an sich bekannten Klebstoff-Beschichtungen, wie sie beispielsweise bei Teppichklebebändern üblich sind. Dabei sind je nach Grundstruktur des Dämmkörpers ein- oder doppelseitige Selbstklebebeläge anwendbar, d.h. solche, bei denen die Trägerschicht entweder einseitig oder beidseitig mit einer Selbstklebeschicht versehen ist. Wie üblich, ist die Aussenseite des Selbstklebebelages vorzugsweise mit einer abziehbaren Deckfolie geschützt.

Eine andere, einfachere Lösung im Falle eines Dämmkörpers mit einer aus Faserstoffen gebildeten Grundschicht kann darin bestehen, dass ein einseitiger Selbstklebebelag mit textiler Trägerschicht vorgesehen ist und dass die Trägerschicht mit der Grundschicht des Dämmkörpers durch einen Tiefenkleber verbunden ist. Mit einer verhältnismässig rauhen Oberfläche der textilen Trägerschicht ergibt sich eine gute Haltbarkeit der Verbindung.

Das Aufbringen eines doppelseitigen Selbstklebebelages auf feste Körper oder Faserstoffschichten und entsprechende Fabrikationsverfahren sind an sich bekannt. Derart beschichtete Platten oder Matten werden zur Herstellung von Zubehörteilen aller Art (Dichtungsstreifen, Gerätefüsse u.a.m.) in Streifen oder Plätzchen geschnitten. Im Falle von Faserstoffschichten handelt es sich jedoch bei den bekannten Anwendungen stets um Teile, bei denen die Verbindung zwischen Faserstoffschicht und Selbstklebebelag weder bei der Montage noch unter den Anwendungsbedingungen einer Zugbelastung ausgesetzt ist, so dass hier die zuvor beschriebenen Probleme nicht auftreten.

In der beigefügten Zeichnung sind Ausführungsbeispiele des erfindungsgemässen Dämmkörpers dargestellt, und zwar zeigen ausschnittweise und im Querschnitt:
- Fig. 1: eine Dämmplatte oder -matte mit einer aus Faserstoffen gebildeten Grundschicht und einer zwischen Grundschicht und Selbstklebebelag angeordneten Zwischenschicht; und
- Fig. 2: eine andere Ausführungsform einer Dämmplatte oder -matte mit einer textilen Trägerschicht für den Selbstklebebelag.

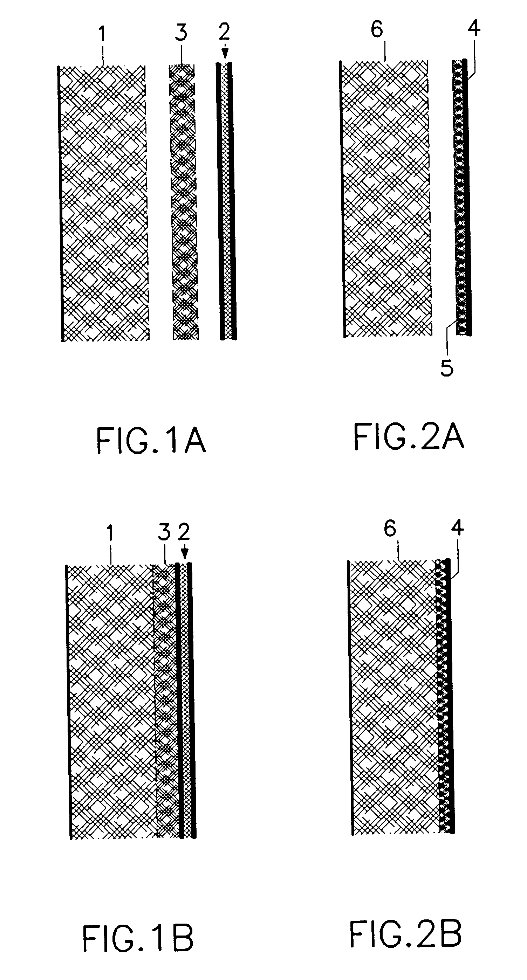

In den Fig. 1A und 2A sind die verschiedenen Schichten zum Aufbau des jeweiligen Dämmkörpers getrennt dargestellt, während die Fig. 1B und 2B jeweils den fertigen Dämmkörper zeigen. Die normalerweise vorhandene Deckfolie auf der aussen liegenden Klebeschicht des Selbstklebebelags ist in den Figuren nicht dargestellt.

Bei der Ausführungsform nach Fig. 1 besitzt der Dämmkörper eine aus Faserstoffen gebildete Grundschicht 1 und an deren Montageseite einen doppelseitigen Selbstklebebelag 2. Zwischen der Grundschicht 1 und dem Selbstklebebelag 2 ist eine Zwischenschicht 3, z.B. in Form eines Vlieses, vorgesehen, die zur Verbesserung des Klebekontaktes eine Faserdichte aufweist, welche grösser ist als diejenige der Grundschicht 1. Für die Verbindung der Zwischenschicht 3 mit der Grundschicht 1 kann in bekannter Weise ein Tiefenkleber angewandt werden.

Der Dämmkörper nach Fig. 2 zeichnet sich dadurch aus, dass ein einseitiger Selbstklebebelag 4 mit textiler Trägerschicht 5 vorgesehen ist, wobei die textile Trägerschicht 5 durch einen Tiefenkleber direkt mit der aus Faserstoffen gebildeten Grundschicht 6 des Dämmkörpers verbunden ist. Auf diese Weise wird ebenfalls eine zuverlässige Verbindung erzielt, sofern die Oberfläche der Trägerschicht 5 hinreichend rauh ist.

## Patentansprüche

1. Flacher Dämmkörper zur Wärme- und/oder Schalldämmung, für die Verlegung an vornehmlich glatten Wandungen, wobei die zur Anlage an eine Wandung bestimmte Seite des Dämmkörpers mit einem Selbstklebebelag versehen ist, dadurch gekennzeichnet, dass der Dämmkörper eine aus Faserstoffen gebildete Grundschicht aufweist und dass zwischen dem Selbstklebebelag und der Grundschicht wenigstens eine aus Faserstoffen gebildete Zwischenschicht vorgesehen ist, deren Faserdichte grösser ist als diejenige der Grundschicht.

2. Dämmkörper nach Anspruch 1, dadurch gekennzeichnet, dass ein doppelseitiger Selbstklebelag (2) vorgesehen ist.

3. Dämmkörper nach Anspruch 1, dadurch gekennzeichnet, dass der Selbstklebebelag flächendeckend auf der Montageseite des Dämmkörpers oder nur auf einem Teil der Oberfläche desselben aufgebracht ist.

4. Dämmkörper nach Anspruch 1, mit mehreren Zwischenschichten, dadurch gekennzeichnet, dass die Zwischenschichten eine von der Grundschicht zum Selbstklebebelag hin zunehmende Faserdichte aufweisen.

5. Dämmkörper nach Anspruch 1, dadurch gekennzeichnet, dass ein einseitiger Selbstklebebelag (4) mit textiler Trägerschicht (5) vorgesehen ist und dass die Trägerschicht (5) mit der Grundschicht (6) des Dämmkörpers durch einen Tiefenkleber verbunden ist (Fig. 2).
